Europäisches Patentamt

**European Patent Office** (11) Veröffentlichungsnummer: **0 006 584**

Office européen des brevets **A1**

---

(12) **EUROPÄISCHE PATENTANMELDUNG**

(21) Anmeldenummer: 79102060.5 (51) Int. Cl.³: **H 04 Q 3/00**

(22) Anmeldetag: 21.06.79

---

(30) Priorität: 28.06.78 DE 2828418

(71) Anmelder: **SIEMENS AKTIENGESELLSCHAFT Berlin und München, Postfach 261, D-8000 München 22 (DE)**

(43) Veröffentlichungstag der Anmeldung: **09.01.80 Patentblatt 80/1**

(72) Erfinder: **Picard, Peter, Dipl.-Ing., Platanenstrasse 116 E, D-8021 Taufkirchen (DE)**

(84) Benannte Vertragsstaaten: **AT CH FR GB IT NL SE**

---

(54) Verfahren zur spulen-, relaiskontakt- und transformatorfreien Rufstrom- und Schleifenstromspeisung.

㊸ Verfahren zur spulen-, relaiskontakt- und transformatorfreien Rufstrom- und Schleifenstromeinspeisung in eine zweiadrige Teilnehmerleitung mit einer Einspeiseeinheit (EE), welche gesteuerte Stromquellen (S1a, S1b, S2a, S2b) enthält.

Während des Rufens speist die erste Stromquelle (S1a) eine Rufstromimpulsfolge (IS) in die angeschlossene Teilnehmerleitung (a) ein.

Nach dem Abheben speist diese Stromquelle (S1a) den mit Informationen modulierbaren Schleifenstrom ein.

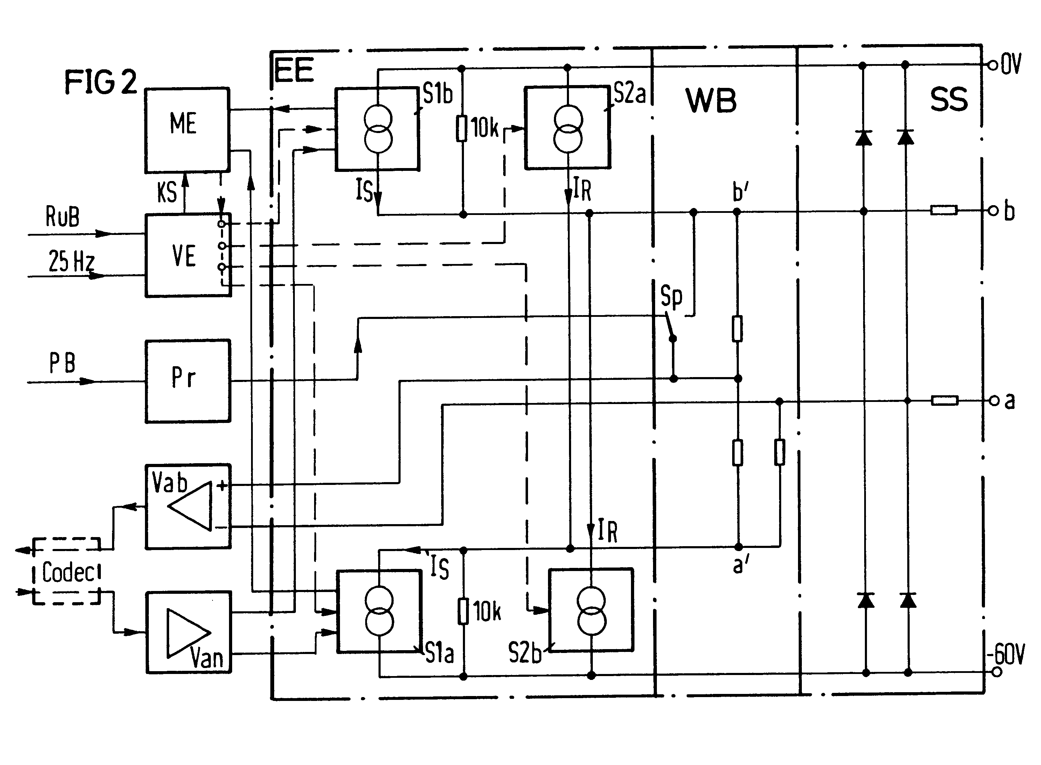

Die Rufstromabschaltung wird durch eine Rufstromimpuls-Momentanamplitude gesteuert, die nicht während der anfänglichen Einschwingvorgänge unmittelbar nach dem Beginn eines solchen Rufimpulses (IS), sondern erst nach deren ausreichenden Abklingen auftritt. Dazu werden die Rufstromimpulse oder Taktimpulse einer Verzögerungseinheit zugeleitet, die ihrerseits zur rechten Zeit die austastende Messung der betreffenden Momentanamplitude in einer Meßeinheit (ME) veranlaßt. Die Meßeinheit steuert dann die Einspeiseeinheit (EE) abhängig von der gemessenen Momentanamplitude (Fig. 2).

ACTORUM AG

- 1 -

SIEMENS AKTIENGESELLSCHAFT            Unser Zeichen

Berlin und München                   VPA  78 P 6 1 1 4  EUR

Verfahren zur spulen-, relaiskontakt-und transformatorfreien Rufstrom- und Schleifenstromeinspeisung.

Die Erfindung betrifft ein Verfahren der Nachrichtentechnik. Sie wurde insbesondere für ein PCM-Fernsprech-
Vermittlungssystem entwickelt, in dessen Ämter durch
Großintegration hergestellte Dekodierer und 2-Draht/
4-Draht-Gabelschaltungen angebracht sind, an die Teilnehmerstationen in der Umgebung des jeweiligen Amtes
über teils lange, teils kurze Teilnehmerleitungen angeschlossen sind. Die Erfindung eignet sich aber auch für
andere Vermittlungssysteme bzw. Ämter, z.B. auch für
analoge Signale übertragende Systeme, selbst wenn sie
keine Gabelschaltung enthalten.

Die Erfindung betrifft nämlich ein Verfahren zur spulen-, relaiskontakt- und transformatorfreien Rufstrom-
und Schleifenstromeinspeisung in eine eine erste und
eine zweite Ader aufweisende Teilnehmerleitung zu einer
Teilnehmerstation, mit einer Einspeiseeinheit, die eine

Be 1 Ky / 12.6.1978

während des Rufens von Rufstromgenerator-Taktimpulsen gesteuerte Stromquelle enthält, nämlich eine erste an die erste Ader angeschlossene Stromquelle, wobei die Einspeiseeinheit während des Rufens einen abwechselnden Betriebszustand aufweist, bei dem rhythmisch die erste Stromquelle entweder, gesteuert von einer Taktimpulsphase, einen ersten Rufstromimpuls der ersten Strompolarität über die erste Ader zur Teilnehmerstation einspeist, oder, gesteuert von einer Taktimpulspause, keinen Strom über diese erste Ader zur Teilnehmerstation einspeist, so daß die erste Stromquelle über die Teilnehmerleitung eine Folge erster unipolarer Rufstromimpulse als Rufstrom zur Teilnehmerstation einspeist, und wobei die Einspeiseeinheit nach dem Abheben des Teilnehmers, zur Einspeisung des - mit dem Teilnehmer gelieferten Empfangsinformationen - modulierbaren Schleifenstromes, in einen andauernden Betriebszustand gesteuert wird, bei dem die erste Stromquelle den Schleifenstrom über die Teilnehmerleitung zur Teilnehmerstation einspeist.

Ein solches Verfahren ist bereits z.B. durch die DE-OS 26 27 140, insbesondere Fig. 11 bekannt. Solche Einspeiseeinheiten haben den Vorteil, zusammen mit der dort ebenfalls gezeigten 2-Draht/4-Draht-Gabelschaltung vollintegrierbar zu sein und damit kostengünstig sowie raum- und arbeitsaufwandsparend gleichzeitig zur Rufstrom- und Schleifenstromversorgung der an die 2-Drahtseite über die Teilnehmerleitung angeschlossenen Teilnehmerstation mitausgenutzt werden zu können. Dabei können die Länge bzw. der Widerstand der Teilnehmerleitung zur Teilnehmerstation und der Eingangswiderstand der Teilnehmerstation im aufgelegten und im abgehobenen Zustand, sowie die Bauteile innerhalb der Gabelschaltung bereits gewisse Toleranzen aufweisen, ohne den Betrieb zu gefährden. Die insgesamt vier Stromquellen, ·nämlich zwei an der ersten· Ader und zwei an der zweiten Ader, senden hier eine bipolare Rustromimpulsfolge aus und können auch zur Verstärkung jener Modulation mitausgenutzt werden, die den von den beiden ankommenden 4-Drahtseite-Anschlüssen zu den 2-Drahtseite- Anschlüssen übertragenen Empfangsinformationen entspricht.

Ein ähnliches,aber nur zwei erste  und nicht auch zwei zweite Stromquellen ausnutzendes Verfahren mit nur unipolaren Rufstromimpulsen ist auch durch die DE-OS 26 49 024, insbesondere durch deren Figur bekannt. Darüberhinaus sind noch weitere Verfahren mit einer transformatorfreien 2-Draht/4-Draht-Gabelschaltung bekannt, die sich ebenfalls zusammen mit ihren Einspeiseeinheiten zur Integration eignen und meistens nur zwei Stromquellen aufweisen, vgl. z.B. 1978 Internat. Zurich Seminar on Digital Communications, Proc.,IEEE Catalogue 78CH1325-0 ASST, Seite C7.1, C7.3, sowie DE-OS 18 14 956, Fig. 10.

Je komplizierter der Aufbau der Einspeiseeinheit und des Eingangs der Teilnehmerstation, und je länger und je inhomogener die Teilnehmerleitung ist, sowie je komplizierter sonstige an die Teilnehmerleitung angeschlossene weitere Einheiten, z.B. Gabelschaltungen oder A/D- und D/A-Wandler sind, z.B. je mehr Transistoren, Eigenkapazitäten und Eigeninduktivitäten dort vorhanden sind und je verschiedener die Toleranzen der Verlustwinkel der komplexen Widerstände im System bzw. Amt sind, umso verschiedener werden die Lauf- zeiten bzw. die bei Beginn der Rufstromimpulse jeweils auftretenden Einschwingverzerrungen auf den Adern der Teilnehmerleitung. Der Anwendung solcher Einspeiseeinheiten in Ämtern bzw. Systemen sind daher oft unangenehme enge Grenzen durch die zulässigen Toleranzen insbesondere von Länge und Widerstand der Adern zur Teilnehmerstation und durch die zulässigen Toleranzen der Eingangswiderstände insbesondere der Teilnehmerstation im aufgelegten und im abgehobenen Zustand gesetzt.

Will man besonders viel Rufenergie, also Rechteck-Rufstromimpulse zur Teilnehmerstation senden, dann sind die Einschwingverzerrungen besonders groß, also die Toleranzen besonders eng.‖

Die Erfindung löst die Aufgabe, diese Toleranzen zu erweitern, so daß auch stärkere und länger andauernde, hinsichtlich Amplitude und Dauer nicht eng definierbare Einschwingverzerrungen auf der Teilnehmerleitung während des Rufens nur noch wenig stören können. Durch die Erfindung wird also einerseits ermöglicht, eine solche Einspeiseeinheit zur Rufstrom und Schleifenstromeinspeisung auch in einem Amt mit sehr verschieden langen und inhomogenen Teilnehmerleitungen und mit erheblich verschiedenen Eingangs-Widerständen der Teilnehmerstation zu verwenden. Die Erfindung fördert andererseits die Anwendung standardisierter hochintegrierter Einspeiseeinheiten in solchen Ämtern und verringert damit den Aufwand insbesondere beim Bau und Betrieb solcher Ämter bzw. bei Neuanschluß von Teilnehmerstationen, im Vergleich zu den heuzutage noch allgemein üblichen, nichtintegrierten, teueren Einspeiseeinheiten. Das Prinzip der Erfindung eignet sich dabei nicht nur für eine mehrere Stromquellen aufweisende Einspeiseeinheit. Dieses Prinzip der Erfindung löst die Aufgabe der Erfindung an sich bereits dann, wenn die Einspeiseeinheit sogar nur eine einzige Stromquelle enthält.

Die Erfindung ist durch ein besonderes Verfahren der Messung der Rufströme auf den Adern gekennzeichnet, nämlich dadurch, daß nicht schon eine während der anfänglichen Einschwingvorgänge unmittelbar nach dem Beginn eines Rufimpulses, sondern erst eine nach dem Abklingen dieser

0006584

78 P 6 114 EUR

Einschwingvorgänge auf der Teilnehmerleitung auftretende Momentanamplitude des eingespeisten Rufstromimpulses
bzw. entsprechender Ströme oder Spannungen, die Rufstromabschaltung steuern und daß dazu zumindest einzelne
der Rufstromimpulse bzw. damit zusammenhänge Ströme oder
Spannungen einer Verzögerungseinheit zugeleitet werden,
die ihrerseits vor dem Ende des betreffenden Rufstromimpulses, aber erst nach den anfänglichen Einschwingvorgängen dieses Rufstromimpulses, eine Meßeinheit steuert
und zwar die Meßeinheit zur abtastenden Messung der dann
jeweils auftretenden Momentanamplitude dieses Rufstromimpulses veranlaßt, und daß a) die Meßeinheit bei Messung einer Momentanamplitude, die typisch für Widerstandswerte zwischen den Adern der Teilnehmerleitung
vor dem Abheben des Teilnehmers sind, die Einspeiseeinheit in deren abwechselnden Betriebszustand steuert und
daß b) die Meßeinheit bei Messung einer Momentanamplitude, die typisch für Widerstandswerte zwischen den Adern
der Teilnehmerleitung nach dem Abheben des Teilnehmers
sind, die Einspeiseeinheit in deren andauernden Betriebszustand steuert. Bei der Erfindung werden also erst jene
Momentanamplituden zur Steuerung der Rufstromabschaltung
ausgenutzt, die erst nach den anfänglichen Einschwingvorgängen, also erst nach dem ausreichenden Abklingen
der Einschwingverzerrungen, auftreten. Bevorzugt liegt
die Momentanamplitude erst nahe dem Ende des betreffenden Rufstromimpulses.

Wenn die Einspeiseeinheit nur eine einzige Stromquelle
enthält, schwankt das Potential der ersten Ader, an die
diese Stromquelle angeschlossen ist, beim Rufen mit erheblich größerer Amplitude um einen Mittelwert, als das
Potential der anderen zweiten Ader der Teilnehmerleitung, was oft nicht stört.

Als Verzögerungseinheit kann man z.B. ein Master-Slave-Flipflop verwenden, dem die vom Taktgenerator gelieferten Taktimpulse oder davon ausgelöste Impulse, z.B. aus den Rufstromimpulsen erzeugte Impulse, an seinem Eingang zugeleitet werden. Am Ausgang der Verzögerungseinheit wird dann ein Impuls erzeugt, der seinerseits die Meßeinheit nach dem ausreichenden Abklingen der anfänglichen Einschwingvorgänge zur austastenden Messung veranlaßt.

Zum Rufen des Teilnehmers braucht man meistens besonders hohe Energien. Daher ist oft die Anbringung einer einzigen Stromquelle in der Einspeiseeinheit nicht ausreichend. Durch die im Anspruch 2 genannte Maßnahme wird die zum Rufen verwendbare Energie vervierfacht, indem die Einspeiseeinheit vier statt einer einzigen Stromquelle enthält. Dabei werden aber die Amplituden der anfänglichen Einschwingvorgänge nur angenähert verdoppelt. Außerdem schwankt bei dieser Weiterbildung das Potential jeder der beiden Adern der Teilnehmerleitung mit der gleichen Amplitude um einen Mittelwert, so daß kapazitive und induktive Kopplungen der ersten Ader zu anderen Teilnehmerleitungen angenähert kompensiert werden durch die kapazitiven und induktiven Kopplungen der zweiten Ader zu jenen anderen Teilnehmerleitungen. Durch diese Weiterbildung werden also vor allem auch die besonders störenden höherfrequenten Komponenten der Einschwingvorgänge weniger stark auf die benachbarten Teilnehmerleitungen gekoppelt und damit ein weiterer der Gründe für Störungen durch Einschwingvorgänge weitgehend beseitigt, obwohl die zum Rufen verwendete Energie sogar vervierfacht ist. Diese Vorteile werden also dadurch erreicht, daß eine weitere erste, aber an die zweite Ader angeschlossene Stromquelle der Einspeiseeinheit während des Rufens, ge-

steuert von der Taktimpulsphase, über die zweite Ader der Teilnehmerleitung einen Rufstromimpuls der ersten, die Rückleitung des Rufstromimpulses der ersten Stromquelle der ersten Ader über die Teilnehmerstation in die weitere erste Stromquelle unterstützenden Strompolarität einspeist, daß eine zweite, an die erste Ader angeschlossene Stromquelle sowie eine weitere zweite, an die zweite Ader angeschlossene Stromquelle während des Rufens, gesteuert von der Taktimpulspause, einen Rufstromimpuls der zweiten, der ersten Strompolarität jeweils entgegengesetzten Strompolarität einspeisen, so daß die ersten Stromquellen im abwechselnden Betriebszustand erste unipolare Stromimpulse der ersten Strompolarität und die zweiten Stromquellen, in den Pausen zwischen den ersten unipolaren Stromimpulsen, zweite unipolare Stromimpulse der zweiten Strompolarität einspeisen und daß damit dann die Einspeiseeinheit bipolare Rufstromimpulse einspeist, und daß im andauernden Betriebszustand der Einspeiseeinheit, also nach dem Abheben des Teilnehmers, nur die ersten Stromquellen oder nur die zweiten Stromquellen, aber nicht die beiden übrigen Stromquellen der Einspeiseeinheit den Schleifenstrom in die Teilnehmerleitung einspeisen.

Eine besonders große zulässige Toleranz für die Länge der Adern zur Teilnehmerstation und für die Eingangswiderstände der Teilnehmerstation wird gemäß Anspruch 3 dadurch erreicht, daß in der Verzögerungseinheit ein vom Rufstromgenerator zugeleiteter, die Folgefrequenz der Rufstromimpulse festlegender Taktimpuls dem ersten Eingang eines Verknüpfungsgliedes und der durch ein Verzögerungsglied verzögerte Taktimpuls dem zweiten Eingang des Verknüpfungsgliedes zugeleitet wird, wodurch zwischen dem Ende des zugeleiteten Taktimpulses und dem Ende des verzögerten Taktimpulses, also kurz vor dem Ende des vom Taktimpuls ausgelösten Rufstromimpulses am Verknüpfungsgliedausgang ein kurzzeitiger Verknüpfungsimpuls erzeugt wird, daß der verzögerte Taktimpuls die Einspeiseeinheit steuert und daß der Verknüpfungsimpuls einem Schalter der Meßeinheit, zur Veranlassung der austastenden Messung des Widerstandswertes zwischen den Adern der Teilnehmerleitung, zugeleitet wird.

Statt den nur kurzzeitigen Verknüpfungsimpuls selbst der Einspeiseeinheit zuzuleiten, kann man aus dem Verknüpfungsimpuls einen länger dauernden Veranlassungsimpuls erzeugen, indem gemäß Anspruch 4 der Verknüpfungsimpuls über ein Flipflop, z.B. über ein Master-Slave-Flipflop, dem Schalter der Meßeinheit zugeleitet wird. Der so erzeugte, länger andauernde Veranlassungsimpuls steuert dann, statt des Verknüpfungsimpulses, die Einspeiseeinheit in deren anhaltenden oder in deren abwechselnden Betriebszustand, je nach der während des Verknüpfungsimpulses bzw. Veranlassungsimpulses gemessenen Momentanamplitude.

Zur Messung der Momentanamplitude braucht man keinen besonderen, die zulässige maximale Länge der Teilnehmerleitung vermindernden Widerstand an einer Ader anzubringen, wenn gemäß Anspruch 5 der Ausgang der von der zu messenden Momentanamplitude durchflossenen Stromquelle einen Regeltransistor enthält, der während der Momentanamplitude vor dem Abheben des Teilnehmers am Ende eines Rufimpulses in seinen gesättigten Zustand, nach dem Abheben aber in seinen ungesättigten Zustand gesteuert wird, und wenn dieser gesättigte Zustand der Meßeinheit gemeldet wird, indem dieser Regeltransistor in seinem gesättigtem Zustand an die Meßeinheit ein das Nichtabheben anzeigendes , über die Meßeinheit die Einspeiseeinheit in ihren abwechselnden Zustand steuerndes Rufen-Fortsetzen-Signal abgibt.

Erdschlüsse, einen Erdtastendruck und Kurzschlüsse zu Drittspannungen, z.B. zur Versorgungsspannung, werden als solche erkennbar, indem gemäß Anspruch 6 die Meßeinheit die Momentanamplituden, zwar gleichzeitig aber getrennt voneinander, sowohl auf der ersten Ader als auch auf der zweiten Ader mißt und indem, bei Abweichung dieser Momentanamplituden voneinander, die Meßeinheit, evtl. zusätzlich je nach der Höhe der gemessenen Momentanamplituden, ein Unsymmetriesignal, nämlich z.B. ein Erdschluß-Signal bzw. Fremdspannungs-Signal, abgibt.

Die den Schleifenstrom nach dem Abheben des Teilnehmers einspeisenden ersten Stromquellen können zur Übertragung bzw. Verstärkung der der Empfangsinformation ent-

0006584.

sprechenden Modulation mitausgenutzt werden, indem gemäß Anspruch 7 im andauernden Betriebszustand der Einspeiseeinheit der Schleifenstrom, durch Steuerung der den Schleifenstrom einspeisenden Stromquelle mit den Empfangsinformationen, die dem Teilnehmer geliefert werden sollen, mit den betreffenden Empfangsinformationen moduliert wird.

Durch die Erfindung können auch beim Rufen auftretende Einschwingverzerrungen unschädlich gemacht werden, die von solchen weiteren Einheiten auf der Teilnehmerleitung erzeugt werden, die an die Teilnehmerleitung angeschlossen sind:

Insbesondere erwies sich bei einem aus hochintegrierten Bausteinen aufgebauten Vermittlungssystem als günstig, gemäß Anspruch 8 die Einspeiseeinheit zusammen mit einer transformatorfreien 2-Draht/4-Draht-Gabelschaltung auf einem gemeinsamen monolithischen Baustein anzubringen und die an die 2-Drahtseite angeschlossene Einspeiseeinheit ihre Ströme über die 2-Drahtseite in die an die 2-Drahtseite angeschlossene Teilnehmerleitung einspeisen zu lassen. Hier bildet die Einspeiseeinheit mit der Gabelschaltung eine hochintegrierte, platzsparende, aufwandsarme und entsprechend billige Baueinheit.

Insbesondere für ein PCM-Fernsprechvermittlungssystem erwies sich auch als günstig, gemäß Anspruch 9 die Einspeiseeinheit zusammen mit einem D/A-Wandler zur Dekodierung der Empfangsinformationen, die die jeweils betreffende, den Schleifenstrom einspeisende Stromquelle steuern - evtl. auch noch zusammen mit einem A/D-Wandler einschließlich der nach Anspruch 8 verwendeten Gabelschaltung, alle gemeinsam auf einem gemeinsamen monolithischen Baustein anzubringen und die an der Analogseite des Wandlers angeschlossene Einspeiseeinheit in deren andauernden Betriebszustand mit den dekodierten Empfangsinformationen zu steuern. Diese hochintegrierte Weiterbildung ist, besonders wenn sie neben dem Wandler noch die Gabelschaltung in sich enthält, besonders günstig hinsichtlich der Aufwandseinsparung.

Bei einem Vermittlungssystem, besonders bei einem PCM-Vermittlungssystem, ist der Anteil der Kosten von Einspeiseeinheiten, Gabelschaltungen und Wandler an den Gesamtkosten oft sehr hoch, nämlich oft über 50 % der Gesamtkosten, wenn man diskrete einzelne Bauelemente anwendet. Gemäß den heutigen Entwicklungstendenzen wird sogar oft angestrebt, möglichst jeder Teilnehmerstation eines PCM-Vermittlungssystems individuell eine eigene Einspeiseeinheit, Gabelschaltung und Wandler im Amt zuzuordnen. Durch die im Anspruch 9 erfaßte Weiterbildung ist es möglich, gerade diese Kosten, bzw. den sie bewirkenden Aufwand, stark zu senken, da nun trotz Großintegration die Tücken der Toleranzeinhaltung hinsichtlich insbesondere der Teilnehmerleitungslänge und -homogenität, und der Eingangswiderstände der Teilnehmerstation entsprechend besser beherrschbar sind.

Die Erfindung wird anhand von in den Figuren gezeigten Ausführungsbeispielen weiter erläutert, wobei

Fig. 1 und 2 ein Ausführungsbeispiel mit einer zusätzlichen Gabelschaltung,

Fig. 3 ein Ausführungsbeispiel einer Meßeinheit,

Fig. 4 ein Ausführungsbeispiel einer den Rufstromgenerator-Taktimpuls verzögernden, den Verknüpfungsimpuls erzeugenden Verzögerungseinheit und

Fig. 5 ein Ausführungsbeispiel zweier erster Stromquellen der Einspeiseeinheit zeigen.

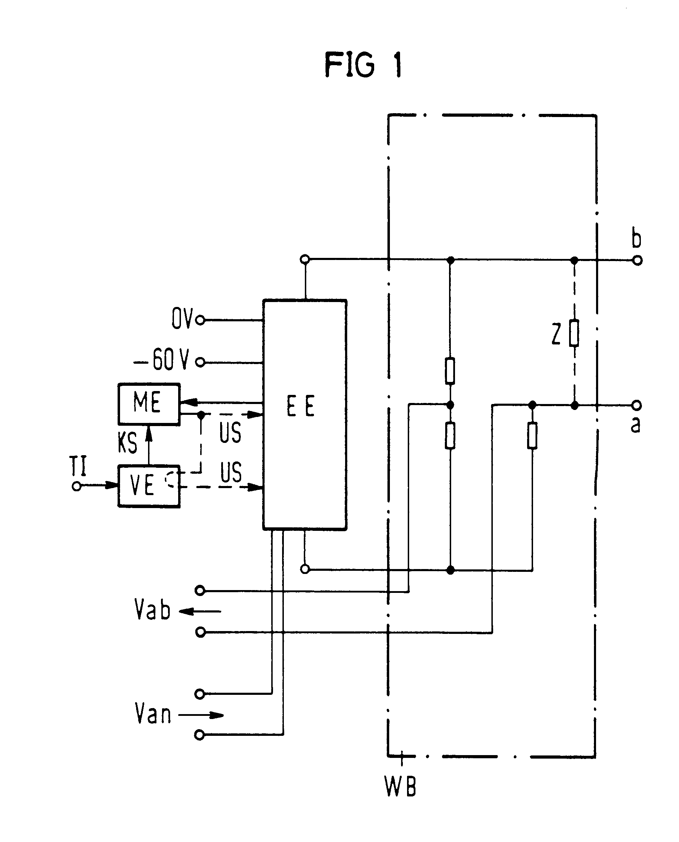

Fig. 1 zeigt einen schematischen Überblick über ein Ausführungsbeispiel einer erfindungsgemäß betriebenen Einspeiseeinheit, die an der 2-Drahtseite einer 2-Draht/4-Draht-Gabelschaltung angebracht ist. Diese Gabelschaltung ist frei von Spulen, insbesondere frei von Transformatoren aufgebaut und zusammen mit der Einspeiseeinheit EE aus integrierten Bausteinen oder vollständig durch einen einzigen integrierten Baustein herstellbar. Die Rufstromeinspeisung und die Schleifenstromeinspeisung erfolgt über die aus Widerständen gebildete Widerstandsbrücke WB der Gabelschaltung, wobei der eine Zweigwiderstand Z dieser Widerstandsbrücke durch den Widerstand der ersten Ader a und der zweiten Ader b der Teilnehmerleitung und durch den Eingangswiderstand der Teilnehmerstation gebildet wird. Der in Fig. 1 gezeigte Zweigwiderstand Z ist also nicht innerhalb der Gabelschaltung angebracht, sondern stellt nur symbolsich den außen angeschlossenen Widerstand zwischen den 2-Drahtseite-Anschlüssen a und b dar.

Die Einspeiseeinheit EE enthält z.B. vier, in Figur 1 nicht gezeigte Stromquellen, nämlich je eine erste und eine zweite, sich in der eingespeisten Strompolarität unterscheidende Stromquelle an jeder Ader. Bei Verminderung der Anforderungan an die Energie der Rufimpulse genügt sogar schon , daß die Einspeiseeinheit nur eine erste, an die erste Ader, z.B. a, angeschlossene Stromquelle enthält, die Ströme mit einer ersten Polarität einspeisen kann.

Diese Stromquellen sind steuerbar, d.h. sie liefern jeweils Ströme, deren Amplitude von einem Steuersignal abhängig ist. Als Steuersignal dient hier ein Signal US, welches später noch genauer beschrieben wird. Dieses Signal US wird von einer Meßeinheit ME geliefert, wobei diese Meßeinheit ME ihrerseits von einer Verzögerungseinheit VE gesteuert wird. Bei dem in Fig. 1 gezeigten Ausführungsbeispiel ist angenommen, daß ein Rufstromgenerator Taktimpulse TI der Verzögerungseinheit VE zuleitet. Die Verzögerungseinheit VE steuert ihrerseits sowohl die Einspeiseeinheit EE bzw. deren Stromquellen als auch die Meßeinheit ME.

Die Widerstandsbrücke WB ist außerdem mit den beiden abgehenden Anschlüssen Vab der 4-Drahtseite verbunden. Die ankommenden Anschlüsse Van der 4-Drahtseite sind hier mit ersten Stromquellen der Einspeiseeinheit EE verbunden, um diese zu steuern und so zur Modulation des Schleifenstromes zu veranlassen.

Die Einspeiseeinheit EE wird während des Rufens in einen abwechselnden Betriebszustand gesteuert, bei dem abwechselnd ein Rufstromimpuls der ersten Polarität und anschließend, bei Anbringung nur einer ersten Stromquelle, kein Strom, bei Anbringung von vier Stromquellen hingegen jeweils ein Rufstromimpuls der zweiten, entgegengesetzten Polarität, über die 2-Drahtseite-Anschlüsse a, b in die Teilnehmerleitung eingespeist werden. Die vier Stromquellen der Einspeiseeinheit EE speisen also hinsichtlich der Stromrichtung jeweils bipolare Rufstromimpulsfolgen in die Teilnehmerleitung ein.

Nach dem Abheben des Teilnehmers wird die Einspeiseeinheit EE in ihren anderen, nämlich den andauernden Betriebszustand gesteuert, damit sie den mit Empfangsinformationen modulierbaren Schleifenstrom zum Empfang an die betreffende Teilnehmerstation liefert. Dazu wird,

78 P 6 114 EUR

bei Anbringung nur der einen ersten Stromquelle, diese Stromquelle den Schleifenstrom einspeisen und, bei Anbringung von vier Stromquellen, werden jeweils zwei Stromquellen der vier Stromquellen den Schleifenstrom einspeisen, wohingegen die beiden anderen Stromquellen dann keinen Strom über die 2-Drahtseite-Anschlüsse der Gabelschaltung einspeisen.

Die vielen Eigenkapazitäten, Eigeninduktivitäten, Transistoren, und auch konzentrierte Kapazitäten und Induktivitäten in der Teilnehmerstation bewirken, daß während des Rufens, jedenfalls bei Beginn eines Rufimpulses, mehr oder weniger starke Einschwingvorgänge auftreten, welche sich dem Rufstrom überlagern. Wenn der Rufstrom durch kräftige Impulse beider Polaritäten gebildet wird, sind die Amplituden der anfänglichen Einschwingverzerrungen besonders groß. Diese Einschwingvorgänge sind hinsichtlich Amplitude, Form und Dauer abhängig von der Anzahl und den Größen der Eigenkapazitäten, Eigeninduktivitäten und der konzentrierten Kapazitäten und Induktivitäten, insbesondere auch abhängig von der Länge und der Homogenität der Teilnehmerleitung zwischen der Gabelschaltung und der Teilnehmerstation. Je nach der Länge und der Art dieser Teilnehmerleitung, je nach den jeweiligen, mit Toleranzen behafteten Eigenschaften der sonstigen an diese Teilnehmerleitung angeschlossenen Einheiten, hier die Gabelschaltung, haben die anfänglichen Einschwingvorgänge verschieden hohe Amplituden, Formen und Ausklingzeiten. Außerdem stören durch Nebensprechen eingekoppelte, überlagerte Einschwingverzerrungen. Um die zulässigen Toleranzen insbesondere für die Länge und die Art der Teilnehmerleitung, sowie um die Toleranzen der elektrischen Eingenschaften der Teilnehmerstation stark zu erhöhen, ist erfindungsgemäß vorgesehen, daß nicht schon die anfänglichen Einschwingvorgänge unmittelbar nach Beginn eines Rufimpulses, sondern erst die nach dem ausreichenden Abklingen dieser Einschwingvorgänge auf der Teilnehmerleitung auftretenden Momentanamplituden des eingespeisten Rufstromimpuls-Stromes bzw. Rufstromimpuls-Spannung zur Steuerung der Rufstromabschaltung ausgenutzt werden.

Erfindungsgemäß werden dazu zumindest einzelne der Rufstromimpulse oder einzelne von mit diesen Rufstromimpulsen zusammenhängenden Impulsen, z.B. Taktimpulse TI, oder damit zusammenhängende, gleichzeitig oder verzögert erzeugte Ströme oder Spannungen, der Verzögerungseinheit VE zugeleitet und diese Verzögerungseinheit VE steuert ihrerseits vor dem Ende des betreffenden Rufstromimpulses, aber erst nach den anfänglichen Einschwingvorgängen dieses Rufstromimpulses, die austastende Messung der dann jeweils auftretenden Momentanamplitude dieses Rufstromimpulses bzw. davon abhängender Ströme oder Spannungen mittels der Meßeinheit ME, die ihrerseits, abhängig von der Momentanamplitude, die Einspeiseeinheit EE bzw. deren Stromquelle bzw. deren Stromquellen steuert. Das geschieht in der Weise, daß a) die Meßeinheit ME bei der Messung einer Momentanamplitude, die typisch für Widerstandswerte zwischen den Teilnehmerleitungsanschlüssen a, b bzw. zwischen den 2-Drahtseite-Anschlüssen a, b vor dem Abheben des Teilnehmers sind, die Einspeiseeinheit EE in deren abwechselnden Betriebszustand steuert und daß b) die Meßeinheit ME bei Messung einer Momentanamplitude, die typisch für Widerstandwerte zwischen den Teilnehmerleitungsanschlüssen a, b bzw. zwischen den 2-Drahtseite-Anschlüssen a, b nach dem Abheben des Teilnehmers sind, die Einspeiseeinheit EE in deren andauernden Betriebszustand steuert.

Nähere Details des vier Stromquellen enthaltenden, in Fig. 1 gezeigten Ausführungsbeispiels zeigt Fig. 2. Die Verzögerungseinheit VE wird von den Rufstromgenerator-Taktimpulsen TI, hier mit 25 Hz gesteuert. Falls gleichzeitig ein Rufbefehl RuB der Verzögerungseinheit zugeführt wird, steuert die Verzögerungseinheit VE einerseits die Einspeiseeinheit EE in deren abwechselnden Zustand und andererseits die Meßeinheit ME in einen Zustand, welcher diese Meßeinheit ME nach dem ausreichenden Abklingen der anfänglichen Einschwingvorgänge zur Messung der Momentanamplitude von Strömen bzw. Spannungen an den 2-Drahtseite-Anschlüssen a, b veranlaßt.

Die Einspeiseeinheit EE enthält die vier Stromquellen S1b, S2b, S1a, S2a. Diese vier Stromquellen sind gesteuert, hier von der Meßeinheit ME und von der Verzögerungseinheit VE, die hier die Rufsteuerung, d.h. die Steuerung in den abwechselnden Zustand übernehmen. Dabei enthält die Einspeiseeinheit EE eine erste Stromquelle S1a für die erste Ader a sowie eine erste Stromquelle S1b für die zweite Ader. An die erste Ader a ist zudem eine zweite Stromquelle S2a angeschlossen, welche Ströme der zweiten entgegengesetzten Polarität an die erste Ader abgeben kann im Vergleich zu den Strömen der ersten Stromquelle der ersten Ader S1a. An die zweite Ader ist die zweite Stromquelle S2b angeschlossen. Von diesen vier Stromquellen sind während einer Rufstromeinspeisung jeweils die ersten Stromquellen S1a, S1b oder jeweils die zweiten Stromquellen S2a, S2b mit der Teilnehmerleitung, hier mit den 2-Drahtseite-Anschlüssen a, b verbunden. Dabei liefern die zweiten Stromquellen S2a, S2b jeweils Ströme der entgegengesetzten Polarität, im Vergleich zu den ersten Stromquellen S1a, S1b, über die 2-Drahtseite-Anschlüsse a, b an die Teilnehmerstation.

Nach dem Abheben des Teilnehmers liefern nur noch die ersten Stromquellen S1a, S1b Strom über die 2-Drahtseite-Anschlüsse a, b an die Teilnehmerstation. Die zweiten Stromquellen S2a, S2b sind hingegen bei diesem Ausführungsbeispiel völlig abgeschaltet. Die von den ersten Stromquellen S1a, S1b gelieferten Ströme bzw. Teile dieses Stromes stellen dann den der Teilnehmerstation zugeleiteten Schleifenstrom dar.

Bei dem in Fig. 2 gezeigten Ausführungsbeispiel ist zusätzlich an die Widerstandsbrücke WB ein Verstärker Vab an den Anschlüssen der abgehenden Richtung der 4-Drahtseite angebracht. Ein Verstärker Van an den Anschlüssen der ankommenden Richtung der 4-Drahtseite wirkt hier direkt auf die beiden ersten Stromquellen S1a, S1b und moduliert so den an die Teilnehmerstation über die Anschlüsse a, b gelieferten Schleifenstrom.

Die Modulation der übertragenen Informationen kann eine PCM-Modulation sein. Es kann jedoch auch eine analoge Amplitudenmodulation oder andere Modulation, z.B. Frequenzmodulation, vorgesehen sein. Bei PCM-Modulation kann insbesondere vorgesehen sein, daß die Umwandlung der Analogsignale in PCM-Signale und die Umwandlung der PCM-Signale in Analogsignale in dem in Fig. 2 gezeigten, an die 4-Drahtseite-Anschlüsse angeschlossenen Codec durchgeführt wird. Es ist jedoch auch möglich, digitale Signale, z.B. für einen Fernschreiber über die Teilnehmerleitung zur Teilnehmerstation zu senden, so daß dann die ersten Stromquellen S1a, S1b durch digitale statt analoge Signale moduliert werden und die mit den digitalen Signalen modulierten Schleifenströme in die betreffende Teilnehmerleitung eingespeist werden.

Fig. 2 zeigt außerdem eine Einrichtung zum Überspannungsschutz SS. Sie besteht aus vier in Brückenschaltung geschalteten Dioden, welche bei Überspannungen auf der ersten Ader oder zweiten Ader durchlässig werden und auf diese Weise insbesondere die Stromquellen S1a, S1b, S2a, S2b, sowie die Verstärker Vab, Van vor Überspannungen schützen. Bei starken, länger andauernden Überspannungen wird zuerst diese Schutzeinrichtung zerstört werden, bevor die Einspeiseeinheit, die Gabelschaltung oder gar sonstige Einrichtungen des Amtes zerstört werden. Außerdem sind innerhalb der Schutzeinrichtung SS noch zwei ohmsche Längswiderstände in Reihe zur ersten und zweiten Ader eingefügt, welche insbesondere bei Kurzschluß,z.B. zwischen der ersten oder zweiten Ader einerseits und den Spannungsversorgungs-Anschlüssen  0V/-60V oder 220 V/380 V andererseits die auftretenden Ströme begrenzen. Die Kurzschlußfestigkeit der Gabelschaltung kann auch dadurch gefördert werden, daß die Ausgänge der Stromquellen S1a, S1b, S2a, S2b jeweils durch Transistoren gebildet werden, die eine hohe Spannungsfestigkeit aufweisen und außerdem ausreichend hochohmig sind, um den auftretenden Strom IS bzw. IR zu begrenzen.

Dadurch, daß hochohmige Widerstände, vgl. 10k , in der Einspeiseeinheit   EE   an den Ausgängen der Stromquellen angebracht werden, sind die Innenwiderstände dieser Stromquellen besser definiert, wodurch diese Stromquellen auch bei Serienfertigung solcher integrierter Bausteine einen ausreichend definierten Innenwiderstand aufweisen und damit einen ausreichend definierten Schleifenstrom bzw. Rufstrom mit hohem Innenwiderstand als hochohmige, gut definierte Stromquellen abgeben.

Außerdem enthält das in Fig. 2 gezeigte Ausführungsbeispiel in der Widerstandsbrücke WB noch den elektronischen Schalter Sp zum Prüfen der Funktionstüchtigkeit der Gabelschaltung. Schließt nämlich dieser Schalter Sp den überbrückten Widerstand der Widerstandsbrücke WB kurz, dann ist diese Widerstandsbrücke WB verstimmt. In diesem Falle werden die über den Verstärker Van empfangenen Signale an der Widerstandsbrücke WB reflektiert und daher über den Verstärker Vab und über die 4-Drahtseite zurückgeliefert. Gleichzeitig kann dabei geprüft werden, ob die Meßeinheit ME bei leitendem Schalter Sp wirklich die Einspeiseeinheit EE bzw. deren Stromquellen in den andauernden Zustand steuert, weil das Leiten des Schalters Sp den abgehobenen Zustand der an die Anschlüsse a, b angeschlossenen Teilnehmerstation vortäuscht. In vielen Fällen ist es zweckmäßig, den Schalter Sp durch eine verstärkende Prüfeinrichtung Pr zu steuern, die ihrerseits durch einen Prüfbefehl PB gesteuert wird.

Es ist bekannt, daß auf der ersten Ader und zweiten Ader eine Längsspannungsbeeinflussung auftreten kann. In der englischsprachigen Literatur werden solche Längsspannungen als longitudinale Signale bzw.als Common-Mode-Signale bezeichnet. Solche Längsspannungen stören das in Fig. 2 gezeigte Ausführungsbeispiel nur wenig, weil diese Längsspannungen, insbesondere deren höherfrequente Komponenten, an den Ausgängen der Stromquellen S1a, S1b, S2a, S2b auftreten, wobei diese Stromquellenausgänge nicht nur gleichstrommäßig hochohmig sind, sondern insbesondere auch wechselstrommäßig hochohmig sind, - vgl. in gleichstrommäßiger Hinsicht die Widerstände 10k in der Einspeiseeinheit EE, sowie in dynamischer Hinsicht insbesondere die Anbringung von in Figur 2 nicht ausdrücklich gezeigten Transistoren an den Ausgängen der Stromquellen. Diese Längsspannungen stören also nicht die Messung der Meßeinheit ME,weil nur ein geringer Anteil der mit den induzierten Längsspannungen bzw. damit verbundenen Längsströme über die Stromquellen selbst fließen. Stattdessen fließen bei diesem Beispiel diese Längsströme,insbesondere deren hochfrequente Komponenten, weitgehend über die ohmschen Widerstände 10k.

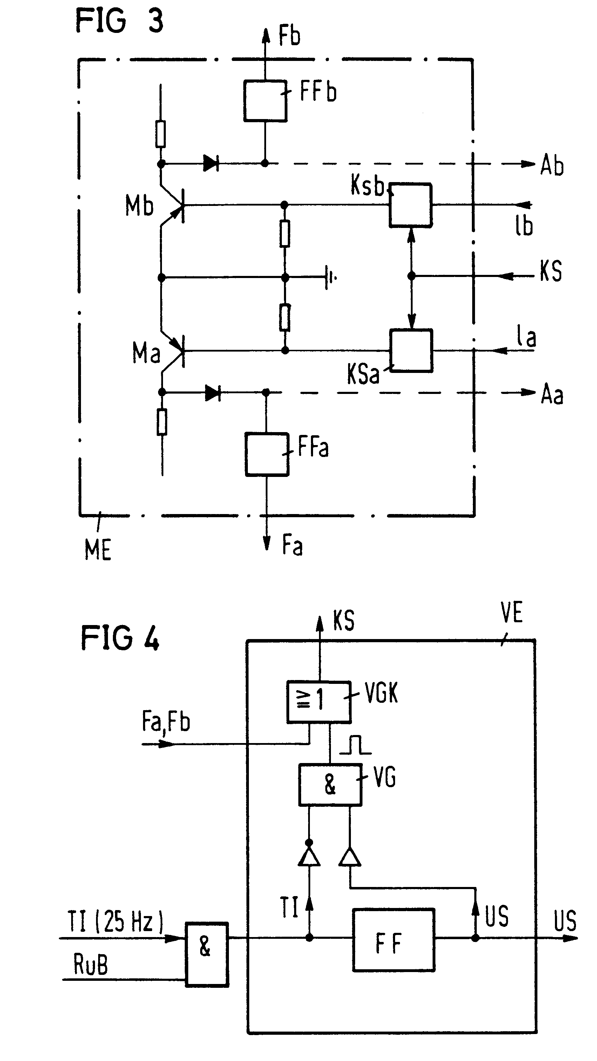

In den Figuren 3 und 4 ist ein besonderes Ausführungsbeispiel für den Aufbau der Meßeinheit ME und der Verknüpfungseinheit VE gezeigt. Das Ausführungsbeispiel dieser Einheiten ME, VE läßt eine besonders große Toleranz insbesondere für die Länge der Adern zur Teilnehmerstation und für die Eingangswiderstände der Teilnehmerstation zu. Bei diesem Ausführungsbeispiel ist vorgesehen, daß der von einem Rufstromgenerator zugeleitete, die Folgefrequenz der Rufstromimpulse festlegende Taktimpuls, z.B. 25 Hz, dem ersten Eingang eines Verknüpfungsgliedes VG, Fig. 4 zugeleitet wird. Der durch das Verzögerungsglied FF verzögerte Taktimpuls US wird dem zweiten Eingang des Verknüpfungsgliedes VG zugeleitet. Dadurch wird zwischen dem Ende des zugeleiteten Taktimpulses TI und dem Ende des verzögerten Taktimpulses US am Ausgang des hier eine UND-Funktion besitzenden Verknüpfungsgliedes VG ein kurzzeitiger Verknüpfungsimpuls erzeugt. Die Dauer dieses Verknüpfungsimpulses hängt von der Verzögerungszeit ab, die das Verzögerungsglied FF aufweist. FF kann z.B. durch eine Kette von Verstärkern gebildet sein, so daß die Dauer des Verknüpfungsimpulses dann erheblich kürzer als eine Millisekunde ist. Das Verzögerungsglied FF kann jedoch auch durch ein monostabiles Flipflop oder ein Master-Slave-Flipflop gebildet sein, wodurch größere Dauern des Verknüpfungsimpulses erreicht werden.

Die Dauer des Verknüpfungsimpulses kann man auch dadurch vergrößern, daß man den Verknüpfungsimpuls einer entsprechenden Einheit, z.B. einem besonderen, in den Figuren nicht gezeigten Flipflop zuleitet. Der dann von diesem Flipflop abgegebene, relativ langandauernde Veranlassungsimpuls steuert seinerseits die Meßeinheit ME. Das in Figur 4 angedeutete Signal KS kann also unmittelbar der kurzzeitige Verknüpfungsimpuls am Ausgang des Verknüpfungsgliedes VG sein, oder der mit Hilfe eines zusätzlichen, in Figur 4 nicht gezeigten Flipflops in seiner Dauer verlängerte Veranlassungsimpuls.

Während des Rufens bei noch nicht abgehobener Teilnehmerstation steuert der verzögerte Taktimpuls US oder ein in den Figuren nicht gezeigtes, von TI oder US gesteuertes besonderes Zwischenglied, z.B. ein weiteres Flipflop, die Einspeiseeinheit in ihren abwechselnden Zustand, in dem während der Taktphase von TI oder US z.B. die ersten Stromquellen und während der Taktpause von TI bzw. US dann die zweiten Stromquellen der Einspeiseeinheit EE in den leitenden Zustand gesteuert werden. Der Verknüpfungsimpuls bzw. Veranlassungsimpuls KS tritt also z.B. kurz vor dem Ende des durch das Verzögerungsglied FF verzögerten Taktimpulses US auf, zumindest aber vor dem Ende des vom Taktimpuls TI bzw. US von der Einspeiseeinheit eingespeisten Rufstromimpulses.

Dieser Verknüpfungsimpuls bzw. Veranlassungsimpuls KS wird der z.B. gemäß Fig. 3 aufgebauten Meßeinheit zugeleitet, nämlich den dortigen Schaltern KSa, KSb. Diese Schalter KSa, KSb werden also kurzzeitig, und zwar kurz vor dem Ende des betreffenden Rufstromimpulses, leitend, so daß die Meßeinheit ME über die Leitungen 1a, 1b dann

die Momentanamplitude des Stromes bzw. der Spannung
des betreffenden Rufstromimpulses messen kann.

Es hat sich als besonders günstig erwiesen, zwei getrennte Meßeinheit-Eingangsleitungen 1a, 1b anzubringen, da man die eine der beiden Leitungen 1a zur Messung des Stromes bzw. der Spannung auf der ersten Ader a und die andere der beiden Leitungen 1b zur Messung des Stromes bzw. der Spannung auf der zweiten Ader b ausnutzen kann. Dadurch werden die Ströme bzw. Spannungen auf der beiden Adern getrennt voneinander gemessen, so daß auch Erdschlüsse, Kurzschlüsse zu spannungsführenden Leitungen,und Kabelbrüche auf den Adern feststellbar sind. Hierzu muß man nur die Leitungen 1a, 1b entweder unmittelbar mit den Adern bzw. mit dort angebrachten Widerständen verbinden, oder man kann, wie später noch gezeigt werden wird, diese Leitungen 1a, 1b auch mit jeweils einer der Stromquellen der Einspeiseeinheit EE verbinden, falls diese Einspeiseeinheit eigene Stromquellen für jede Ader aufweist. Das dynamische Verhalten der betreffenden Stromquellen, insbesondere deren Regeltransistoren zur Strom- bzw. Spannungsstabilisierung, reagieren nämlich ebenfalls auf die Größe der Momentanamplitude von Strömen bzw. Spannungen der Rufstromimpulse.

Die über die Leitungen 1a, 1b empfangenen Momentanamplituden werden also während der Dauer des Verknüpfungsimpulses bzw. Veranlassungsimpulses KS hier an die einen gewissen Schwellwert aufweisenden Meßtransistoren Ma, Mb weitergeleitet, an deren Kollektoren die den Momentanamplituden entsprechenden Signale Aa, Ab auftreten. Man kann die Dauer dieser Signale Aa, Ab auch verlängern, indem man diese Signale z.B. über Flipflops FFa, FFb leitet und damit langandauernde, den Momentanamplituden entsprechende Signale Fa, Fb erzeugt.

Diese den Momentanamplituden entsprechenden Signale
Fa, Fb kann man ihrerseits wieder einem weiteren
Verknüpfungsglied, vgl. z.B. VGK in Fig. 4, zuleiten
und dadurch erreichen, daß bei Momentanamplituden, die
dem abgehobenen Zustand der Teilnehmerstation entsprechen, ein Dauersignal als Signal KS abgegeben wird
und daß bei Momentanamplituden, die dem eingehängten Zustand der Teilnehmerstation entsprechen, dort
weiterhin nur die vergleichsweise kurzandauernden Verknüpfungsimpulse bzw. Veranlassungsimpulse KS abgegeben werden. Zum Beispiel dieses Dauersignal KS oder
ein entsprechendes Signal Aa, Ab oder Fa, Fb kann dann
auch in für sich bekannter Weise den Rufbefehl RuB abschalten bzw. beenden.

Da im abgehobenen Zustand der Teilnehmerstation das
Signal KS ein Dauersignal, also ein Gleichstrom- bzw.
Gleichspannungssignal ist, wird dieses Dauersignal die
Schalter KSa, KSb der in Fig. 3 gezeigten Meßeinrichtung ME dauernd in den leitenden Zustand steuern, bis
der Teilnehmer einhängt. Auf diese Weise überwachen die
Meßtransistoren Ma, Mb der Meßeinheit ME, ständig
aktiviert durch die Schalter KSa, KSb, ständig den Zustand der Teilnehmerstation darauf, ob sie noch immer
abgehoben ist.

Die Schalter KSa, KSb werden nämlich erst nichtleitend,
sobald eingehängt wird, weil dann Fa, Fb bzw. Aa, Ab
sein Potential ändert, wodurch KS geändert und KSa, KSb
nichtleitend werden. Erst wenn der Teilnehmer einhängt
und dadurch der Schleifenstrom unterbrochen wird, messen
nämlich die Meßtransistoren Ma, Mb der in Fig. 3 gezeigten Meßeinheit ME . Momentanamplituden des Schleifenstroms, die dem eingehängten Zustand der Teilnehmerstation
entsprechen. Die Signale Fa, Fb entsprechen dann dem eingehängten Zustand der Teilnehmerstation, so daß das Verknüpfungsglied VGK, vgl. Fig. 4, nunmehr ein Signal KS liefert, welches die Schalter KSa, KSb der in Fig. 3 gezeigten Meßeinheit ME wieder in den nichtleitenden Zustand steuert. Erst wenn wieder ein Rufbefehl RuB der Verzögerungseinheit VE zugeführt wird, vgl. Fig. 4, wird von neuem das Signal KS, die Schalter KSa, KSb und die Einspeiseeinheit EE in ihre abwechselnden Zustände gesteuert, bis der Teilnehmer abhebt und dadurch der Rufbefehl RuB abgeschaltet wird oder bis ohne Abheben des Teilnehmers der Rufbefehl RuB aus anderen Gründen abgeschaltet wird. Solange bei eingehängter Teilnehmerstation noch kein Rufbefehl RuB vorliegt, liefern weder die ersten noch die zweiten Stromquellen der Einspeiseeinheit EE Strom,-abgesehen von den über die Widerstände 10k weitergeleiteten Potentialen, die ihrerseits auch zur Überwachung des Teilnehmers, ob er ungerufen aushängt, durch nicht gezeigte Einheiten ausgenutzt werden können.

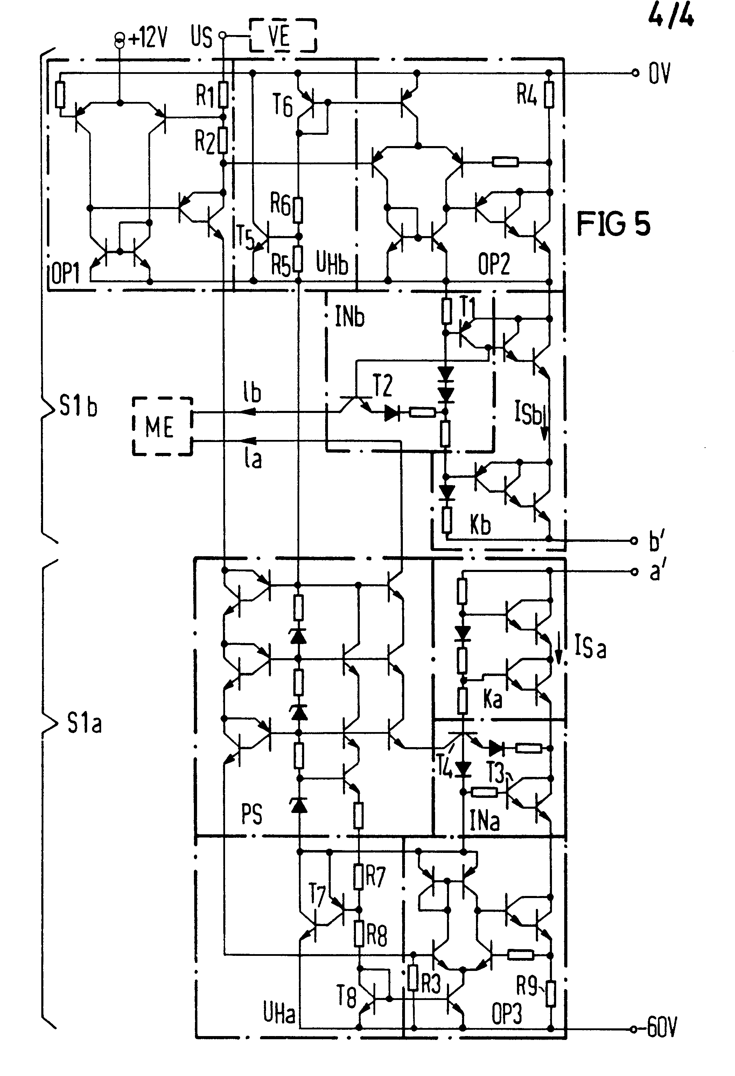

In Fig. 5 ist ein Ausführungsbeispiel für den Aufbau zweier erster Stromquellen S1a, S1b gezeigt, von denen je eine über die Ausgänge a', b' an eine der Adern a, b angeschlossen ist, vgl. auch Fig. 2. Der Aufbau der zweiten Stromquellen S2a, S2b kann an sich gleich wie der Aufbau der ersten Stromquellen S1a, S1b sein, jedoch mit dem Unterschied, daß an den in Fig. 5 gezeigten Ausgang a' nicht die erste Ader a, sondern die zweite Ader b und an den in Fig. 5 gezeigten Ausgang b' nicht die zweite Ader b, sondern die erste Ader a angeschlossen wird, vgl. Fig. 2.

Die erste Stromquelle S1a enthält einen Hilfsspannungsgeber UHa, einen dritten Operationsverstärker OP3, einen Pegelschieber PS, eine Indikationsstelle INa und eine Transistorkaskade Ka.

Die erste Stromquelle S1b enthält einen Hilfsspannungsgeber UHb, ferner einen ersten Operationsverstärker OP1,
der z.B. von der Verzögerungseinheit VE direkt, oder
über das obengenannte Zwischenglied, gesteuert wird,
einen zweiten, von OP1 gesteuerten Operationsverstärker
OP2, eine Indikationsstelle INb und eine Transistorkaskade Kb.

Die Bauelemente R5, T5, T6 in dem Hilfsspannungsgeber
UHb sowie die Bauelemente R7, R8, T7, T8 im Hilfsspannungsgeber UHa erzeugen Hilfsspannungen für die Operationsverstärker OP1, OP2, OP3. Die vom ersten Operationsverstärker OP1 und von dem Hilfsspannungsgeber UHb erzeugten Spannungen bzw. Ströme werden über den Pegelschieber PS mit einem veränderten Spannungspegel an den Hilfsspannungsgeber UHa zur Steuerung des OP3 weitergeleitet.

Dem ersten Operationsverstärker OP1 wird über R1 der verzögerte Taktimpuls US direkt, oder über das den verzögerten Taktimpuls hinsichtlich Amplitude, Form und/oder
Dauer beeinflussende Zwischenglied, zugeleitet. Der innere Aufbau der Operationsverstärker OP1, OP2, OP3 ist
dabei derart, daß die an die Anschlüsse a', b' von den
Transistorkaskaden Ka, Kb gelieferten eingeprägten
Ströme ISa, ISb direkt proportional zu der dem Bauelement R1 zugeführten Spannung US ist, solange der Regeltransistor T1, T3 noch nicht übersteuert ist. Es gilt
nämlich für R2 = R3 und R4 = R9 die Beziehung ISa = ISb =
(US·R2)/(R1·R4).

Der Pegelschieber PS wurde insbesondere deswegen angebracht, um die Betriebsspannungen für OP3 zu erniedrigen. Es sind nämlich relativ hohe Betriebsgleichspannungen 0V, -60V zugeführt, um hohe Energien der Rufstromimpulse zu erreichen. Auch die Transistorkaskaden Ka, Kb verändern den Spannungspegel der eingeprägten Ströme ISa, ISb, so daß diese Transistorkaskaden Ka, Kb ebenfalls die Spannungsfestigkeit der in Fig. 5 gezeigten Stromquellen erhöhen.

Im eingehängten Zustand der an die Anschlüsse a', b' angeschlossenen Teilnehmerstation kann während des Rufens nicht der eingeprägte Strom ISa, ISb während der ganzen Dauer des betreffenden Rufstromimpulses fließen. Nach dem Abklingen der anfänglichen Einschwingverzerrungen wird daher über die Anschlüsse a', b' während des betreffenden Rufstromimpulses entweder kein Strom oder ein zu kleiner Strom fließen. Dann gehen also die Regeltransistoren T1, T3 von ihrem aktiven Bereich in ihren Sättigungszustand über, da diese Regeltransistoren nicht mehr fähig sind, den eingeprägten Strom ISb, ISa, z.B. gegen Ende des betreffenden Taktimpulses, in seiner vollen Amplitude aufrechtzuerhalten.

Den Sättingszustand der Regeltransistoren T1, T3 erkennen die Transistoren T2, T4 in den Indiaktionsstellen INb, INa. Diese Indikationsstellen haben also die Aufgabe, Signale an die Leitungen 1b, 1a abzugeben, die den Eingangszustand der Teilnehmerleitung anzeigen. Sobald nämlich die Regeltransistoren T1, T3 in den Indikationsstellen INb, INa in ihren gesättigten Zustand übergehen, werden die Transistoren T2, T4 dieser Indikationsstellen leitend, wodurch die Meßeinrichtung ME den Sättigungszustand der Regeltransistoren T1, T3 und damit den entsprechenden Eingangszustand der Teilnehmerleitung anzeigen.

In der Meßeinheit ME wird dann, wie schon vorher erläutert, insbesondere durch Austastung mittels der Schalter KSb, KSa während des leitenden Zustandes der Transistoren T2, T4 kurzzeitig die Momentanamplitude gemessen. Dabei wird während des leitenden Zustandes der Transistoren T2, T4 ein solcher Zeitpunkt zur Austastung gewählt, daß in der Meßeinheit ME durch Austastung die Momentanamplitude zuverlässig während des Sättigungszustandes der Regeltransistoren T1, T3 nach dem ausreichenden Abklingen der anfänglichen Einschwingvorgänge gemessen wird.

Obwohl die Erfindung anhand von bipolaren Ausführungsbeispielen erläutert wurde, ist die Erfindung nicht auf diese bipolare Technik beschränkt. Es eignen sich auch andere Techniken, z.B. MOS-Technik, als Herstellungstechnik.

0006584

Patentansprüche

1. Verfahren zur spulen-, relaiskontakt- und transformatorfreien Rufstrom- und Schleifenstromspeisung in eine erste und eine zweite Ader aufweisende Teilnehmerleitung zu einer Teilnehmerstation, mit einer Einspeiseeinheit, die eine während des Rufens von Rufstromgenerator-Taktimpulsen gesteuerte Stromquelle enthält, nämlich eine erste an die erste Ader angeschlossene Stromquelle, wobei die Einspeiseeinheit während des Rufens einen abwechselnden Betriebszustand aufweist, bei dem rhythmisch die erste Stromquelle entweder, gesteuert von einer Taktimpulsphase, einen ersten Rufstromimpuls der ersten Strompolarität über die erste Ader zur Teilnehmerstation einspeist, oder, gesteuert von einer Taktimpulspause, keinen Strom über diese erste Ader zur Teilnehmerstation einspeist, so daß die erste Stromquelle über die Teilnehmerleitung eine Folge erster unipolarer Rufstromimpulse als Rufstrom zur Teilnehmerstation einspeist, und wobei die Einspeiseeinheit nach dem Abheben des Teilnehmers, zur Einspeisung des - mit dem Teilnehmer gelieferten Empfangsinformationen - modulierbaren Schleifenstromes, in einen andauernden Betriebszustand gesteuert wird, bei dem die erste Stromquelle den Schleifenstrom über die Teilnehmerleitung zur Teilnehmerstation einspeist, insbesondere für ein PCM-Fernsprech-Vermittlungssystem, d a - d u r c h g e k e n n z e i c h n e t , daß nicht eine während der anfänglichen Einschwingvorgänge unmittelbar nach dem Beginn eines Rufstromimpulses (IS), sondern erst eine nach dem Abklingen dieser Einschwingvorgänge auf der Teilnehmerleitung (a, b) auftretene, bei aufgelegter Teilnehmerstation einen typischen Schwellwert unter- oder überschreitende Momentanamplitude der eingespeisten Rufstromimpulse (IS) bzw. entsprechende Ströme oder Spannungen, die Rufstromabschaltung steuern und daß dazu zumindest einzelne der Rufstromimpulse (IS) beziehungsweise damit zusammenhängende Ströme oder Spannungen (TI) einer Verzögerungseinheit (VE) zugeleitet
werden, die ihrerseits vor dem Ende des betreffenden
Rufstromimpulses (IS), aber erst nach den anfänglichen
Einschwingvorgängen dieses Rufstromimpulses (IS), eine
Meßeinheit (ME) steuert, und zwar die Meßeinheit (ME)
zur abtastenden Messung der dann jeweils auftretenden
Momentanamplitude dieses Rufstromimpulses (IS) veranlaßt, und

daß a) die Meßeinheit (ME) bei Messung einer Momentanamplitude, die typisch für Widerstandswerte zwischen
den Adern der Teilnehmerleitung (a, b) vor dem Abheben
des Teilnehmers sind, die Einspeiseeinheit (EE) in deren abwechselnden Betriebszustand steuert und

daß b) die Meßeinheit (ME) bei Messung einer Momentanamplitude, die typisch für Widerstandswerte zwischen
den Adern der Teilnehmerleitung (a, b) nach dem Abheben
des Teilnehmers sind, die Einspeiseeinheit (EE) in deren andauernden Betriebszustand steuert.

2. Verfahren nach Anspruch 1, d a d u r c h  g e -
k e n n z e i c h n e t , daß eine weitere erste, an
die zweite Ader angeschlossene Stromquelle (S1b) der
Einspeiseeinheit (EE) während des Rufens, gesteuert
von der Taktimpulsphase, über die zweite Ader (b) der
Teilnehmerleitung einen Rufstromimpuls (IS) der ersten,
die Rückleitung des Rufstromimpulses (IS) der ersten
Stromquelle (S1a) der ersten Ader (a) über die Teilnehmerstation in die weitere erste Stromquelle (S1b)
unterstützenden Strompolarität einspeist, daß eine zweite, an die erste Ader (a) angeschlossene Stromquelle
(S2a) sowie eine weitere zweite, an die zweite Ader (b)
angeschlossene Stromquelle (S2b) während des Rufens, gesteuert von der Taktimpulspause, einen Rufstromimpuls
der zweiten, der ersten Strompolarität (IS) jeweils entgegengesetzten Strompolarität (IR) einspeisen, so daß die ersten Stromquellen (S1a, S1b) im abwechselnden Betriebszustand erste unipolare Stromimpulse (IS) der ersten Strompolarität und die zweiten Stromquellen (S2a, S2b), in den Pausen zwischen den ersten unipolaren Stromimpulsen (IS), zweite unipolare Stromimpulse (IR) der zweiten Strompolarität einspeisen und so daß damit dann die Einspeiseeinheit (EE) bipolare Rufstromimpulse einspeist, und daß im andauernden Betriebszustand der Einspeiseeinheit (EE), also nach dem Abheben des Teilnehmers, nur die ersten Stromquellen (S1a, S1b) oder nur die zweiten Stromquellen (S2a, S2b), aber nicht die beiden übrigen Stromquellen der Einspeiseeinheit (EE) den Schleifenstrom in die Teilnehmerleitung (a, b) einspeisen.

3. Verfahren nach Anspruch 1 oder 2, d a d u r c h   g e k e n n z e i c h n e t , daß in der Verzögerungseinheit (VE) ein vom Rufstromgenerator zugeleiteter, die Folgefrequenz der Rufstromimpulse (25 Hz) festlegender Taktimpuls (TI) dem ersten Eingang eines Verknüpfungsgliedes (VG) und der durch ein Verzögerungsglied (FF) verzögerte Taktimpuls (US) dem zweiten Eingang des Verknüpfungsgliedes (VG) zugeleitet wird, wodurch zwischen dem Ende des zugeleiteten Taktimpulses (TI) und dem Ende des verzögerten Taktimpulses (US), also kurz vor dem Ende des vom Taktimpuls ausgelösten Rufstromimpulses (ISa, ISb),am Verknüpfungsgliedausgang ein kurzzeitiger Verknüpfungsimpuls erzeugt wird, daß der verzögerte Taktimpuls (US) die Einspeiseeinheit (EE) steuert und daß der Verknüpfungsimpuls einem Schalter (KSa, Ksb) der Meßeinheit (ME), zur Veranlassung der austastenden Messung des Widerstandswertes (Z) zwischen den Adern der Teilnehmerleitung (a, b), zugeleitet wird.

4. Verfahren nach Anspruch 3, d a d u r c h g e - k e n n z e i c h n e t , daß der Verknüpfungsimpuls (KS) über ein Flipflop dem Schalter (KSa, KSb) der Meßeinheit (ME) zugeleitet wird.

5. Verfahren nach einem der vorhergehenden Ansprüche, d a d u r c h g e k e n n z e i c h n e t , daß der Ausgang (Ka, Kb) der von der zu messenden Momentanamplitude durchflossenen Stromquelle (S1a, S1b) einen Regeltransistor (T3, T1) enthält, der während der Momentanamplitude vor dem Abheben des Teilnehmers am Ende eines Rufimpulses (ISa, ISb) in seinen gesättigten Zustand gesteuert ist, und daß dieser gesättigte Zustand der Meßeinheit (ME) gemeldet wird, indem dieser Regeltransistor (T3, T1) in seinem gesättigten Zustand an die Meßeinheit (ME) ein das Nichtabheben anzeigendes, über die Meßeinheit (ME) die Einspeiseeinheit (EE) in ihren abwechselnden Zustand steuerndes Rufen-Fortsetzen- Signal (über T4, T2 und 1a, 1b) abgibt.

6. Verfahren nach einem der vorhergehenden Ansprüche, d a d u r c h g e k e n n z e i c h n e t , daß die Meßeinheit (ME) die Momentanamplituden, zwar gleichzeitig aber getrennt voneinander, sowohl auf der ersten Ader (a) als auch auf der zweiten Ader (b) mißt und daß, bei Abweichung dieser Momentanamplituden voneinander, die Meßeinheit (ME) je nach der Höhe der gemessenen Momentanamplituden ein Erdschluß-Signal bzw. Fremdspannungs-Signal abgibt.

7. Verfahren nach einem der vorhergehenden Ansprüche, d a d u r c h g e k e n n z e i c h n e t , daß,im andauernden Betriebszustand der Einspeiseeinheit (EE), der Schleifenstrom (ISa, ISb), durch Steuerung der den Schleifenstrom einspeisenden Stromquelle (S1a, S1b) mit den Empfangsinformationen, die dem Teilnehmer geliefert werden sollen, mit den betreffenden Empfangsinformationen moduliert wird.

8. Verfahren nach einem der vorhergehenden Ansprüche, d a d u r c h g e k e n n z e i c h n e t , daß die Einspeiseeinheit (EE) zusammen mit einer transformatorfreien 2-Draht/4-Draht-Gabelschaltung auf einem gemeinsamen monolithischen Baustein (Fig. 2) angebracht ist und daß die an die 2-Drahtseite angeschlossene Einspeiseeinheit (EE) ihre Ströme (IS, IR) über die 2-Drahtseite (WB bzw. a', b', Fig. 2) in die an die 2-Drahtseite (a, b) angeschlossene Teilnehmerleitung einspeist.

9. Verfahren nach einem der vorhergehenden Ansprüche, d a d u r c h g e k e n n z e i c h n e t , daß die Einspeiseeinheit (EE), zusammen mit einem D/A-Wandler (Codec), auf einem gemeinsamen monolithischen Baustein (Fig. 2) angebracht ist, und daß die an der Analogseite des D/A-Wandlers angeschlossene, den Schleifenstrom einspeisende Stromquelle (S1a, S1b) der Einspeiseeinheit (EE) in deren andauernden Betriebszustand mit den dekodierten Empfangsinformationen gesteuert wird.

FIG 1

FIG 2

000658 4  2/4

FIG 3

ME

FIG 4

0006584

4/4

FIG 5

Europäisches Patentamt

**EUROPÄISCHER RECHERCHENBERICHT**

0006584

Nummer der Anmeldung

EP 79 10 2060

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | DE - A - 2 357 294 (FRIEDRICH MERK TELEFONBAU) <br> * Seite 6, Zeile 24 bis Seite 9, Zeile 26 * <br> -- | 1,3,4 |
| | AU - B - 427 674 (AMALGAMATED WIRELESS) <br> * Seite 7, Zeile 20 bis Seite 8, Zeile 29 * <br> -- | 2,5 |
| D | DE - A - 2 627 140 (HITACHI) <br> * Seite 9, Zeile 24 bis Seite 10, Zeile 1; Seite 17, Zeile 24 bis Seite 19, Zeile 27 * <br> ---- | 2,7 |

**KLASSIFIKATION DER ANMELDUNG (Int.Cl. 3)**

H 04 Q 3/00

**RECHERCHIERTE SACHGEBIETE (Int. Cl. 3)**

H 04 M 19/02

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 08-10-1979 | VERSLYPE |

EPA form 1503.1  06.78